# FASCICULE DE BREVET EUROPEEN

(11) **EP 3 419 842 B1**
(45) Date de publication et mention de la délivrance du brevet: **06.04.2022**
(21) Numéro de dépôt: 17710339.7
(22) Date de dépôt: 21.02.2017
(51) Int. Cl.: B60H 1/00, B60H 1/03, B60H 1/14

(54) **SYSTÈME DE GESTION THERMIQUE, NOTAMMENT POUR UN VÉHICULE AUTOMOBILE DE TYPE HYBRIDE**
WÄRMEVERWALTUNGSSYSTEM, INSBESONDERE FÜR EIN HYBRIDKRAFTFAHRZEUG
HEAT MANAGEMENT SYSTEM, IN PARTICULAR FOR A HYBRID MOTOR VEHICLE

(30) Priorité: 23.02.2016 FR 1651454
(43) Date de publication de la demande: 02.01.2019
(73) Titulaire: Renault s.a.s, 92100 Boulogne Billancourt (FR)
(72) Inventeur: MARTIN, Williams, 78000 VERSAILLES (FR); BEREIZIAT, Arnaud, 75015 PARIS (FR); SURMONT, Guillaume, 78180 MONTIGNY LE BRETONNEUX (FR)
(74) Mandataire: Renault Group
(86) Numéro de dépôt international: PCT/FR2017/050383
(87) Numéro de publication internationale: WO 2017/144809

(56) Documents cités:
- WO-A1-2011/076198
- WO-A1-2012/004507
- WO-A1-2015/040978
- WO-A1-2015/086969
- WO-A1-2015/091969
- US-A1- 2012 225 341

## Description

L'invention concerne un système de gestion thermique, pour un véhicule automobile de type hybride.

L'invention concerne plus particulièrement un système de gestion thermique pour un véhicule automobile de type hybride comportant au moins un moteur thermique et un moteur électrique, ledit système comportant au moins :
- un premier circuit de refroidissement pour le refroidissement du moteur thermique du véhicule par circulation d'au moins un premier liquide de refroidissement, et
- un deuxième circuit de refroidissement pour refroidir par circulation d'au moins un deuxième liquide de refroidissement au moins le moteur électrique et des moyens d'électronique de puissance associés audit moteur électrique.

On connaît de l'état de la technique des exemples d'un tel système de gestion thermique (également encore appelé de « thermo-management ») notamment mais non exclusivement mis en œuvre dans un véhicule automobile de type hybride.

Un tel système est connu du document WO 2015/004507 A1. Dans le domaine de l'automobile, le terme « hybride » signifie que le véhicule est équipé de deux types de motorisation faisant appel à deux types d'énergie.

Un véhicule hybride comporte notamment au moins un moteur thermique, fournissant généralement l'énergie nécessaire au déplacement du véhicule, et un ou plusieurs moteur(s) électrique(s) permettant d'optimiser son fonctionnement.

De manière connue, on distingue principalement trois familles de motorisation pour véhicules hybrides, à savoir les « micro-hybride », les « mild-hybride » et les « full-hybride », le classement dans l'une desdites familles étant déterminé en fonction de la puissance du moteur électrique utilisé.

De multiples combinaisons sont possibles afin d'associer un ou plusieurs moteurs électriques avec un moteur thermique, chacune ayant des caractéristiques particulières.

On désigne encore de tels véhicules « hybrides » par l'acronyme « PHEV » pour « *Plug-in Hybrid Electric Vehicule* » en anglais.

Le système de chauffage des véhicules hybrides est généralement identique à celui des véhicules thermiques, seuls les modes de fonctionnement hybrides changeant. La mise en action du chauffage est déterminée par le fonctionnement du moteur thermique pour fournir à un circuit de refroidissement du moteur thermique les calories nécessaires au chauffage.

Le système de chauffage du véhicule comporte généralement au moins un radiateur de chauffage (ou « aérotherme ») qui est associé au circuit de refroidissement du moteur thermique.

A la différence du moteur thermique, le rendement énergétique d'un moteur électrique est élevé de sorte qu'il est établi qu'il n'y a pas ou peu d'énergie (de calories) qui puisse être utilisée pour chauffer le véhicule.

On recherche toutefois à améliorer la gestion thermique dans un tel véhicule automobile hybride et tout particulièrement pour assurer de manière optimale la fonction de chauffage.

Le but de la présente invention est notamment de proposer une nouvelle conception de système de gestion thermique d'un véhicule automobile hybride pour améliorer le chauffage de l'intérieur de l'habitacle du véhicule, tout en simplifiant ledit système de gestion thermique.

Dans ce but, l'invention propose un système de gestion thermique du type décrit précédemment, suivant les caractéristiques de la revendication 1.

Selon l'invention, le premier circuit de refroidissement, dit haute température, du moteur thermique et le deuxième circuit de refroidissement, dit basse température, associé notamment au moteur électrique sont indépendants l'un de l'autre.

Une telle conception du système de refroidissement avec deux circuits de refroidissement indépendants, déconnectés, permet en outre de faciliter le dégazage.

Grâce à un tel système, on récupère les calories produites par le moteur thermique en fonctionnement afin de pouvoir chauffer l'intérieur de l'habitacle du véhicule automobile de type hybride. Les calories récupérées du moteur thermique s'ajoutent ainsi à celles produites par le moteur électrique et la partie d'électronique de puissance qui lui est associée.

Selon l'invention, ledit au moins un radiateur de chauffage (ou « aérotherme ») est agencé dans le deuxième circuit de refroidissement basse température pour participer sélectivement à ladite fonction de chauffage de l'habitacle.

L'agencement du radiateur de chauffage (ou « aérotherme ») permet avantageusement de simplifier le système de refroidissement, tout particulièrement le deuxième circuit de refroidissement dit basse température, en réduisant notamment le nombre de moyens nécessaires tels que les électrovannes, les pompes à eau, les bocaux de dégazage, etc.

Selon l'invention :
- le deuxième circuit de refroidissement comporte au moins un bocal de dégazage qui est monté en parallèle dudit au moins un radiateur de chauffage.

Selon d'autres caractéristiques avantageuses de l'invention,
- le premier circuit de refroidissement du moteur thermique et le deuxième circuit de refroidissement sont mis sélectivement en relation de transfert thermique à travers au moins un échangeur thermique de type eau-eau ;
- ledit au moins un échangeur thermique de type eau-eau est monté en dérivation par rapport au deuxième circuit de refroidissement ;
- le deuxième circuit de refroidissement comporte des moyens de chauffage qui sont commandés sélectivement pour chauffer le deuxième liquide de refroidissement ;
- lesdits moyens de chauffage sont agencés en amont dudit au moins un radiateur de chauffage pour le chauffage de l'intérieur de l'habitacle du véhicule ;
- le deuxième circuit de refroidissement comporte des moyens de mesure de la température du deuxième liquide de refroidissement ;
- le deuxième circuit de refroidissement comporte au moins un radiateur de refroidissement et une branche de dérivation dudit au moins un radiateur ;
- le deuxième circuit de refroidissement comporte au moins un circulateur qui est agencé en aval dudit radiateur de refroidissement ;
- le deuxième circuit de refroidissement comporte une boucle de refroidissement pour refroidir au moins une batterie haute tension associée audit moteur électrique au moyen dudit deuxième liquide de refroidissement.

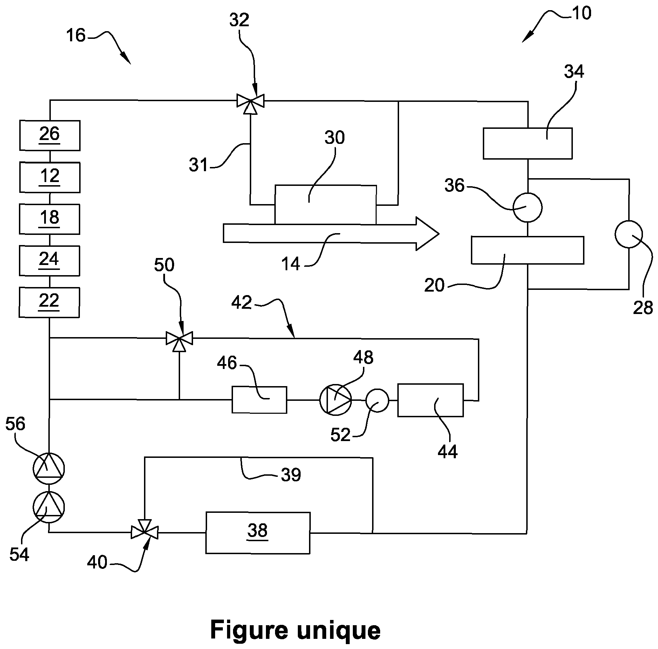

D'autres caractéristiques et avantages de l'invention apparaîtront à la lecture de la description qui va suivre pour la compréhension de laquelle on se reportera à la figure unique qui représente partiellement un système de gestion thermique d'un véhicule hydride et qui illustre plus particulièrement un deuxième circuit de refroidissement comportant un aérotherme selon un exemple de réalisation de l'invention.

On a représenté schématiquement sur la figure unique, un système 10 de gestion thermique (ou de thermo-management) pour un véhicule automobile de type hybride (non représenté).

Un tel véhicule hybride comporte un moteur thermique (non représenté) et au moins un moteur électrique 12.

Le système 10 de gestion thermique du véhicule comporte au moins un premier circuit 14 de refroidissement, dit haute température, pour le refroidissement du moteur thermique du véhicule par circulation d'au moins un premier liquide de refroidissement.

Sur la figure unique, le circuit 14 de refroidissement du moteur thermique n'est pas illustré de manière détaillée et représenté schématiquement par une flèche.

Le système 10 de gestion thermique du véhicule comporte un deuxième circuit 16 de refroidissement, dit basse température.

Le deuxième circuit 16 de refroidissement est notamment destiné à refroidir, par circulation d'au moins un deuxième liquide de refroidissement, au moins le moteur électrique 12 et des moyens 18 d'électronique de puissance associés audit moteur électrique 12.

Selon l'invention, le deuxième circuit 16 de refroidissement comporte au moins un radiateur 20 de chauffage, encore généralement appelé aérotherme, pour le chauffage de l'intérieur de l'habitacle du véhicule.

Dans l'exemple de réalisation, le deuxième liquide de refroidissement dudit deuxième circuit 16 de refroidissement est, outre ledit moteur électrique 12 et lesdits moyens 18 d'électronique de puissance associés, en relation de transfert thermique avec au moins un chargeur 22 et/ou un convertisseur 24 continu-continu (DC-DC) et/ou un second moteur électrique 26.

Le deuxième circuit 16 de refroidissement comporte au moins un bocal 28 de dégazage qui est ici monté en parallèle dudit au moins un radiateur 20 de chauffage (ou aérotherme).

Avantageusement, le premier circuit 14 de refroidissement du moteur thermique et le deuxième circuit 16 de refroidissement sont mis sélectivement en relation de transfert thermique à travers au moins un échangeur thermique 30 de type eau-eau.

Le premier circuit 12 de refroidissement (dit haute température) du moteur thermique dans lequel circule le premier liquide de refroidissement et le deuxième circuit 16 de refroidissement (dit basse température) dans lequel circule le deuxième liquide de refroidissement sont avantageusement indépendants l'un de l'autre.

De manière connue, le liquide de refroidissement utilisé dans un véhicule est principalement constitué par de l'eau formant la base du fluide caloporteur et à laquelle sont avantageusement ajoutés des additifs présentant par exemple des propriétés antigel et/ou anticorrosive.

De préférence, ledit au moins un échangeur thermique 30 de type eau-eau est monté en dérivation par rapport au deuxième circuit de refroidissement, dans une branche 31 de dérivation (ou by-pass).

Avantageusement, l'échangeur thermique 30 de type eau-eau permet de transférer des calories du premier fluide de refroidissement du moteur thermique 12 vers le deuxième fluide de refroidissement, plus particulièrement lorsque le moteur thermique 12 est en fonctionnement.

Le deuxième circuit 16 de refroidissement comporte des moyens 32 de régulation agencés en amont de l'échangeur thermique 30 pour commander sélectivement la circulation du deuxième liquide de refroidissement dans la branche 31 de dérivation comportant ledit au moins un échangeur thermique 30 de type eau-eau.

De préférence, les moyens 32 de régulation sont constitués par une vanne trois voies.

En variante non représentée, ledit échangeur thermique 30 de type eau-eau comporte des moyens de régulation intégrés qui sont pilotés pour commander sélectivement la circulation dudit deuxième liquide de refroidissement dans le deuxième circuit 16 de refroidissement.

Dans une telle variante et par comparaison avec l'exemple de réalisation représenté sur la figure, ladite branche 31 de dérivation est alors supprimée, la fonction de « by-pass » étant directement intégrée audit échangeur thermique 30.

En variante non représentée, le deuxième circuit 16 de refroidissement pourrait ne pas comporter un tel échangeur thermique 30 de type eau-eau.

Avantageusement, des moyens supplémentaires de chauffage sont alors prévus pour compenser les calories issues du moteur thermique 12 et non transmises via ledit échangeur thermique 30 de type eau-eau.

De tels moyens de chauffage supplémentaires sont intégrés au système dit « C.V.C » en français et correspondant à l'acronyme de « *Chauffage, Ventilation, Climatisation* ».

On rappelle qu'un tel système « CVC » est également désigné en anglais par l'acronyme « HVAC » pour « *Heating, Ventilation, Air-Conditioning ».*

De préférence, lesdits moyens de chauffage supplémentaires du système « CVC » (ou HVAC) comportent par exemple des éléments chauffants pour réchauffer l'air, notamment des éléments chauffants tels que des résistances de type « CTP » (acronyme de « *Coefficient de Température Positif* ») permettant une autorégulation.

Avantageusement, le deuxième circuit 16 de refroidissement comporte des moyens 34 de chauffage qui sont commandés sélectivement pour chauffer ledit deuxième liquide de refroidissement.

Les moyens 34 de chauffage comportent par exemple des résistances électriques pour former une bouilloire apte à chauffer le deuxième liquide de refroidissement à une température de consigne donnée.

Avantageusement, de tels moyens 34 de chauffage sont également susceptibles d'être utilisés pour réchauffer le premier liquide de refroidissement du premier circuit 14 de refroidissement du moteur thermique afin de faciliter notamment la montée en température dudit moteur thermique.

Le transfert thermique s'effectue alors en sens opposé à travers l'échangeur thermique 30 de type eau-eau, du deuxième liquide de refroidissement vers le premier liquide de refroidissement du moteur thermique.

Grâce à un tel réchauffement du premier liquide de refroidissement par le deuxième liquide chauffé par les moyens 34 de chauffage, on peut avantageusement réduire les frottements lors de la mise en fonctionnement du moteur thermique.

Les moyens 34 de chauffage sont agencés en amont dudit au moins un radiateur 20 de chauffage (ou aérotherme) pour le chauffage de l'intérieur de l'habitacle du véhicule.

Le deuxième circuit 16 de refroidissement comporte des moyens 36 de mesure de température pour mesurer la température du deuxième liquide de refroidissement.

De préférence, lesdits moyens 36 de mesure de la température du deuxième liquide de refroidissement sont agencés en amont dudit au moins un radiateur 20 de chauffage et en aval desdits moyens 34 de chauffage.

Le deuxième circuit 16 de refroidissement comporte au moins un radiateur 38 de refroidissement.

Suivant l'invention, le deuxième circuit 16 de refroidissement comporte une branche 39 de dérivation (ou by-pass) dudit radiateur 38 de refroidissement.

Le deuxième circuit 16 de refroidissement comporte des moyens 40 de régulation, tels qu'une vanne trois voies, qui sont agencés en aval dudit radiateur 38 de refroidissement.

Grâce auxdits moyens 40 de régulation et à ladite branche 39 de dérivation, le radiateur 38 de refroidissement est susceptible d'être traversé par le deuxième liquide de refroidissement ou de ne pas l'être.

Avantageusement, les moyens 40 de régulation sont commandés pour que le deuxième liquide de refroidissement ne traverse pas ledit radiateur 38 de refroidissement pour conserver les calories dudit deuxième liquide de refroidissement de manière à utiliser tout ou partie desdites calories pour réaliser une autre fonction que le seul chauffage de l'habitacle du véhicule.

Tel pourrait être par exemple le cas lorsque le véhicule est utilisé avec une température de l'air extérieur très basse, c'est-à-dire dans des conditions dites de « grand froid ».

En effet, les calories présentes dans le deuxième liquide de refroidissement sont alors susceptibles d'être par exemple également utilisées pour réchauffer une batterie haute tension associée au moteur électrique.

Dans l'exemple de réalisation illustré sur la figure unique, le deuxième circuit 16 de refroidissement comporte une boucle 42 de refroidissement pour refroidir au moyen dudit deuxième liquide de refroidissement au moins une batterie 44, dite haute tension, qui est associée audit moteur 12 électrique.

Le deuxième liquide de refroidissement est par exemple susceptible d'être mis en circulation dans une telle boucle 42 de refroidissement d'une batterie 44 haute tension.

De préférence, ladite boucle 42 de refroidissement de la batterie 44 haute tension comporte au moins un refroidisseur 46.

De préférence, ladite boucle 42 de refroidissement de la batterie 44 haute tension comporte au moins un circulateur 48, ledit circulateur 48 étant agencé entre ledit refroidisseur 46 et ladite au moins une batterie 44 haute tension.

Avantageusement, la boucle 42 de refroidissement de la batterie 44 haute tension comporte des moyens 50 de régulation commandés sélectivement pour y réguler la circulation du liquide de refroidissement.

Les moyens 50 de régulation de ladite boucle 42 de refroidissement sont par exemple constitués par une vanne trois voies.

Les moyens 50 de régulation permettent notamment de faire circuler sélectivement le deuxième liquide de refroidissement entre ladite boucle 42 et le deuxième circuit 16 de refroidissement. En fonction de la position des moyens 50 de régulation, ladite boucle 42 de refroidissement peut être isolée du deuxième circuit 16 de refroidissement, la circulation interrompue.

Dans l'exemple de réalisation, la boucle 42 de refroidissement de la batterie 44 haute tension est raccordée au deuxième circuit 16 de refroidissement.

En variante non représentée, la boucle 42 de refroidissement de la batterie 44 haute tension est indépendante du deuxième circuit 16 de refroidissement.

De préférence, ladite boucle 42 de refroidissement de la batterie 44 haute tension comporte au moins des moyens 52 de mesure de la température.

Avantageusement, lesdits moyens 52 de mesure de température sont agencés en aval du refroidisseur 46, de préférence en aval du circulateur 48 et en amont de la batterie 44 haute tension, pour mesurer la température du deuxième liquide de refroidissement dans ladite boucle 42.

De préférence, le deuxième circuit 16 de refroidissement comporte au moins un circulateur qui est agencé en aval dudit radiateur 38 de refroidissement.

Avantageusement, le deuxième circuit 16 de refroidissement comporte deux circulateurs, respectivement un premier circulateur 54 et un deuxième circulateur 56.

Dans l'exemple de réalisation, le premier circulateur 54 et le deuxième circulateur 56 sont agencés en série, en aval dudit radiateur 38 de refroidissement.

Dans l'exemple de réalisation, les deux circulateurs 54 et 56 sont agencés en aval des moyens 40 de régulation associés audit radiateur 38 de refroidissement et sa branche 39 de dérivation.

Les deux circulateurs 54 et 56 sont agencés en amont du tronçon du deuxième circuit 16 de refroidissement comportant ledit au moins un moteur 12 électrique et les moyens 18 d'électronique de puissance associés.

L'exemple de réalisation représenté sur la figure unique est donné à titre non limitatif d'un système 10 de gestion thermique selon l'invention.

## Revendications

1. Système (10) de gestion thermique pour un véhicule automobile de type hybride comportant au moins un moteur thermique et un moteur (12) électrique, ledit système (10) comportant au moins :
- un premier circuit (14) de refroidissement pour le refroidissement du moteur thermique du véhicule par circulation d'au moins un premier liquide de refroidissement, et
- un deuxième circuit (16) de refroidissement pour refroidir par circulation d'au moins un deuxième liquide de refroidissement au moins le moteur (12) électrique et des moyens (18) d'électronique de puissance associés audit moteur (12) électrique,
ledit deuxième circuit (16) de refroidissement étant indépendant du premier circuit (14) de refroidissement et comportant au moins un radiateur (20) de chauffage qui est agencé dans ledit deuxième circuit (16) de refroidissement pour le chauffage de l'intérieur de l'habitacle du véhicule, le deuxième circuit (16) de refroidissement comportant au moins un radiateur (38) de refroidissement, ledit système étant **caractérisé en ce que** ledit deuxième circuit (16) de refroidissement comporte une branche (39) de dérivation dudit au moins un radiateur (38) de refroidissement et des moyens (40) de régulation commandés pour que le deuxième liquide de refroidissement ne traverse pas ledit radiateur (38) de refroidissement pour conserver les calories dudit deuxième liquide de refroidissement de manière à utiliser tout ou partie desdites calories pour réaliser une autre fonction que le seul chauffage de l'habitacle du véhicule, et **en ce que** le deuxième circuit (16) de refroidissement comporte au moins un bocal (28) de dégazage qui est monté en parallèle dudit au moins un radiateur (20) de chauffage.

2. Système selon la revendication 1, **caractérisé en ce que** le premier circuit (14) de refroidissement du moteur thermique et le deuxième circuit (16) de refroidissement sont mis sélectivement en relation de transfert thermique à travers au moins un échangeur (30) thermique de type eau-eau.

3. Système selon la revendication 2, **caractérisé en ce que** ledit au moins un échangeur (30) thermique de type eau-eau est monté en dérivation par rapport au deuxième circuit (16) de refroidissement.

4. Système selon l'une quelconque des revendications 1 à 3, **caractérisé en ce que** le deuxième circuit (16) de refroidissement comporte des moyens (34) de chauffage qui sont commandés sélectivement pour chauffer le deuxième liquide de refroidissement.

5. Système selon la revendication 4, **caractérisé en ce que** lesdits moyens (34) de chauffage sont agencés en amont dudit au moins un radiateur (20) de chauffage pour le chauffage de l'intérieur de l'habitacle du véhicule.

6. Système selon l'une quelconque des revendications 1 à 5, **caractérisé en ce que** le deuxième circuit (16) de refroidissement comporte des moyens (36) de mesure de la température du deuxième liquide de refroidissement.

7. Système selon l'une quelconque des revendications précédentes, **caractérisé en ce que** le deuxième circuit (16) de refroidissement comporte au moins un circulateur (54, 56) qui est agencé en aval dudit radiateur (38) de refroidissement.

8. Système selon l'une quelconque des revendications 1 à 7, **caractérisé en ce que** le deuxième circuit (16) de refroidissement comporte une boucle (42) de refroidissement pour refroidir au moins une batterie (44) haute tension associée audit moteur (12) électrique au moyen dudit deuxième liquide de refroidissement.

## Patentansprüche

1. Wärmemanagementsystem (10) für ein Hybrid-Kraftfahrzeug, das mindestens einen Verbrennungsmotor und einen Elektromotor (12) aufweist, wobei das System (10) wenigstens Folgendes aufweist:
- einen ersten Kühlkreislauf (14) zur Kühlung des Verbrennungsmotors des Fahrzeugs durch Zirkulation mindestens einer ersten Kühlflüssigkeit, und
- einen zweiten Kühlkreislauf (16) zur Kühlung wenigstens des Elektromotors (12) und der Leistungselektronikmittel (18), die dem Elektromotor (12) zugeordnet sind, durch Zirkulation mindestens einer zweiten Kühlflüssigkeit,
wobei der zweite Kühlkreislauf (16) vom ersten Kühlkreislauf (14) unabhängig ist und mindestens einen Heizkörper (20), der im zweiten Kühlkreislauf (16) angeordnet ist, zur Beheizung des Inneren des Insassenraums des Fahrzeugs aufweist, wobei der zweite Kühlkreislauf (16) mindestens einen Kühler (38) aufweist, wobei das System **dadurch gekennzeichnet ist, dass** der zweite Kühlkreislauf (16) einen Zweig (39) zur Umgehung des mindestens einen Kühlers (38) und gesteuerte Regelmittel (40) aufweist, damit die zweite Kühlflüssigkeit den Kühler (38) nicht durchströmt, um die Kalorien der zweiten Kühlflüssigkeit zu erhalten, so dass alle oder einige der Kalorien genutzt werden, um eine andere Funktion als nur die Beheizung des Insassenraums des Fahrzeugs auszuüben, und dadurch, dass der zweite Kühlkreislauf (16) mindestens einen Entgasungsbehälter (28) aufweist, der zu dem mindestens einen Heizkörper (20) parallel geschaltet ist.

2. System nach Anspruch 1, **dadurch gekennzeichnet, dass** der erste Kühlkreislauf (14) des Verbrennungsmotors und der zweite Kühlkreislauf (16) durch mindestens einen Wasser-Wasser-Wärmetauscher (30) selektiv in Wärmeübertragungsbeziehung gesetzt sind.

3. System nach Anspruch 2, **dadurch gekennzeichnet, dass** der mindestens eine Wasser-Wasser-Wärmetauscher (30) im Nebenschluss zum zweiten Kühlkreislauf (16) geschaltet ist.

4. System nach einem der Ansprüche 1 bis 3, **dadurch gekennzeichnet, dass** der zweite Kühlkreislauf (16) Heizmittel (34) aufweist, die selektiv gesteuert werden, um die zweite Kühlflüssigkeit zu erwärmen.

5. System nach Anspruch 4, **dadurch gekennzeichnet, dass** die Heizmittel (34) stromauf des mindestens einen Heizkörpers (20) zur Beheizung des Inneren des Insassenraums des Fahrzeugs angeordnet sind.

6. System nach einem der Ansprüche 1 bis 5, **dadurch gekennzeichnet, dass** der zweite Kühlkreislauf (16) Mittel (36) zur Messung der Temperatur der zweiten Kühlflüssigkeit aufweist.

7. System nach einem der vorhergehenden Ansprüche, **dadurch gekennzeichnet, dass** der zweite Kühlkreislauf (16) mindestens einen Zirkulator (54, 56) aufweist, der stromab des Kühlers (38) angeordnet ist.

8. System nach einem der Ansprüche 1 bis 7, **dadurch gekennzeichnet, dass** der zweite Kühlkreislauf (16) eine Kühlschleife (42) aufweist, um mindestens eine Hochspannungsbatterie (44), die dem Elektromotor (12) zugeordnet ist, mittels der zweiten Kühlflüssigkeit zu kühlen.

## Claims

1. Heat management system (10) for a hybrid motor vehicle having at least an internal combustion engine and an electric motor (12), said system (10) having at least:
- a first cooling circuit (14) for the cooling of the internal combustion engine of the vehicle by circulation of at least a first cooling liquid, and
- a second cooling circuit (16) for cooling at least the electric motor (12) and power electronics means (18) associated with said electric motor (12) by circulation of at least a second cooling liquid,
said second cooling circuit (16) being independent of the first cooling circuit (14) and having at least one heating radiator (20) that is arranged in said second cooling circuit (16) for the heating of the interior of the passenger compartment of the vehicle, the second cooling circuit (16) having at least one cooling radiator (38), said system being **characterized in that** said second cooling circuit (16) has a branch (39) bypassing said at least one cooling radiator (38) and adjustment means (40) controlled such that the second cooling liquid does not pass through said cooling radiator (38) so as to conserve the heat energy of said second cooling liquid such that all or some of said heat energy is used to perform a function other than solely heating the passenger compartment of the vehicle, and **in that** the second cooling circuit (16) has at least one degassing jar (28) that is mounted in parallel with said at least one heating radiator (20).

2. System according to Claim 1, **characterized in that** the first cooling circuit (14) of the internal combustion engine and the second cooling circuit (16) are brought selectively into a heat-transfer relationship through at least one water-to-water heat exchanger (30).

3. System according to Claim 2, **characterized in that** said at least one water-to-water heat exchanger (30) is mounted as a bypass with respect to the second cooling circuit (16).

4. System according to any one of Claims 1 to 3, **characterized in that** the second cooling circuit (16) has heating means (34) that are controlled selectively to heat the second cooling liquid.

5. System according to Claim 4, **characterized in that** said heating means (34) are arranged upstream of said at least one heating radiator (20) for the heating of the interior of the passenger compartment of the vehicle.

6. System according to any one of Claims 1 to 5, **characterized in that** the second cooling circuit (16) has means (36) for measuring the temperature of the second cooling liquid.

7. System according to any one of the preceding claims, **characterized in that** the second cooling circuit (16) has at least one circulator (54, 56) that is arranged downstream of said cooling radiator (38).

8. System according to any one of Claims 1 to 7, **characterized in that** the second cooling circuit (16) has a cooling loop (42) for cooling at least one high-voltage battery (44) associated with said electric motor (12) by means of said second cooling liquid.
